Europäisches Patentamt

European Patent Office

Office européen des brevets

(11) Publication number: **0 353 977**
**A2**

# EUROPEAN PATENT APPLICATION

(21) Application number: 89307775.0

(22) Date of filing: 31.07.89

(51) Int. Cl.⁴ **B29C 47/02 , B23K 20/10**

(30) Priority: 03.08.88 GB 8818465

(43) Date of publication of application:
07.02.90 Bulletin 90/06

(84) Designated Contracting States:
AT BE CH DE ES FR GB GR IT LI LU NL SE

(71) Applicant: KiTECHNOLOGY B.V.
P.O. Box 12914
NL-1100 AX Amsterdam(NL)

(72) Inventor: Barnoach, Itzhak
23 Dollis Avenue
London N3 1DA(GB)

(74) Representative: West, Alan Harry et al
R.G.C. Jenkins & Co. 26 Caxton Street
London SW1H 0RJ(GB)

(54) Apparatus for forming plastics coated tube.

(57) Apparatus for forming a plastics coated metal tube comprising means for forming a continuous strip of metal into a U-shape and a forming sleeve for folding the strip into an overlapping tube. A mandrel is also provided which extends through the forming sleeve and through a locating sleeve. The locating sleeve centralises the tube as it passes over the mandrel and welding means are provided for welding the overlapping tube as it passes through the locating sleeve. According to the invention, the welding means comprises an ultrasonic welding wheel and drive means for the welding wheel, the drive means being capable of driving the welding wheel at a peripheral speed identical to the speed at which the overlapping tube is drawn past the wheel.

## APPARATUS FOR FORMING PLASTICS COATED TUBE

The present invention relates to apparatus for forming plastics coated metal or metal alloy tube.

Such a tube may be made by forming a thin aluminium strip into a tube which is then coated on both the inner and outer surfaces with a plastics material such as a polyethylene and has many advantageous characteristics. It is light, can be easily bent, has good corrosion resistance, has improved fluid flow characteristics and can be easily connected and jointed.

This type of plastics coated tube and its method of manufacture is discussed in U.S. Patent Specification No. 4370186. That specification describes a method of manufacture in which a strip of aluminium is folded into a tubular form, seamed and then passed over a mandrel. Plastics material is then extruded from the mandrel onto the inner surface of the aluminium tube and the tube then passes through an orifice where a layer of plastics is extruded onto the outer surface of the tube.

European Patent No. 0024220 and British Patent Application No. 8625432 describe apparatus for forming such a plastics coated metal tube comprising means for forming a continuous strip of metal into a U-shape, a forming bush for folding the strip into an overlapping tube, a mandrel extending through the forming bush, a locating sleeve for locating the tube as it passes over the mandrel, and welding means for welding the overlapping tube as it passes through the locating sleeve.

The locating sleeve has a welding slot on one side and is generally circular so as to hold the form of the overlapping tube as it is welded by an ultrasonic welding wheel. The welding wheel is mounted separately from the mandrel so that it can be brought into position over the locating sleeve and lowered into the welding slot to weld the tube along the overlap. As the welding operation takes place, the mandrel acts as an anvil, the tube being clamped between the wheel and the mandrel during the welding operation.

The welding operation is preferably carried out using any known type of ultrasonic welding wheel. Such known welding wheels are, however, of the free-wheeling type in which rotation of the wheel is caused solely by the movement of the overlapping portion of the metal tube against the periphery of the wheel.

In accordance with the present invention, there is provided apparatus for forming plastics coated metal or metal alloy tube of the general type described in European Patent No. 0024220 and British Patent Application No. 8625432, but in which the welding means comprises an ultrasonic welding wheel which, in use, is driven at a peripheral speed identical to the speed of the metal tube over the mandrel. By driving the welding wheel independently of the metal tube, it has been found that the quality and reliability of the weld is improved and that less tension is required to be placed on the plastics coated tube by the draw off device arranged downstream of the welding and plastics coating stations.

According to the present invention there is therefore provided apparatus for forming a plastics coated metal tube comprising means for forming a continuous strip of metal into a U-shape, a forming bush for folding the strip into an overlapping tube, a mandrel extending through the forming bush, a locating sleeve for locating the tube as it passes over the mandrel, welding means for welding the overlapping tube as it passes through the locating sleeve and means for extruding plastics material from the mandrel onto the inner surface of the tube as it passes over the mandrel, characterised in that the welding means comprises an ultrasonic welding wheel and drive means for the welding wheel, the drive means being capable of driving the welding wheel at a peripheral speed identical to the speed at which the overlapping tube is drawn past the wheel.

Preferably, in accordance with the apparatus described in British Patent Application No. 8625432, the forming bush and the locating sleeve are mounted on the mandrel so as to float therewith.

A preferred form of the invention will now be described with reference to the accompanying drawings in which:

Figure 1 is a block diagram of the method steps entailed in the tube forming method of the present invention;

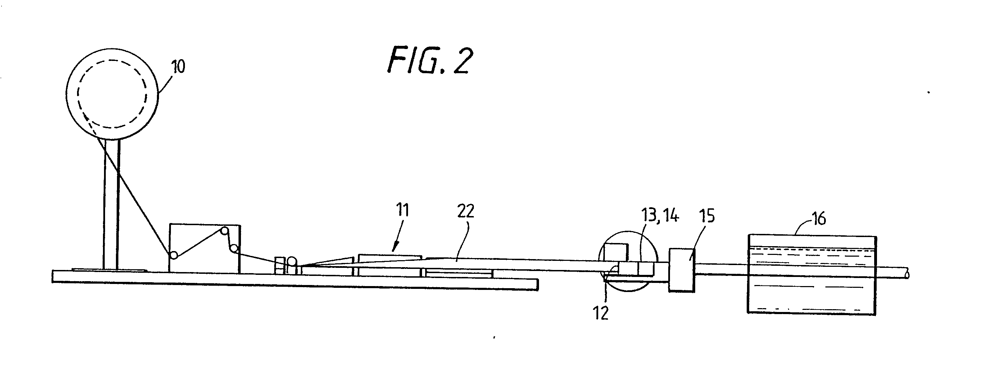

Figure 2 is an elevation in a diagrammatic form of apparatus for carrying out the method of the present invention;

Figure 3 is a perspective view of the apparatus shown in Figure 2;

Figure 4 is a section through a detail of the apparatus shown in Figures 2 and 3;

Figure 5 is a perspective view of the forming bush shown in Figure 4;

Figure 6 is an end view of the bush of Figure 5;

Figure 7 is a section taken through the mandrel of the apparatus shown in Figure 4;

Figure 8 is a section taken through the line VIII-VIII of Figure 7;

Figure 9 is a section taken through a further part of the apparatus shown in Figures 2 and 3; and

Figure 10 is a section taken on the line X-X of Figure 9.

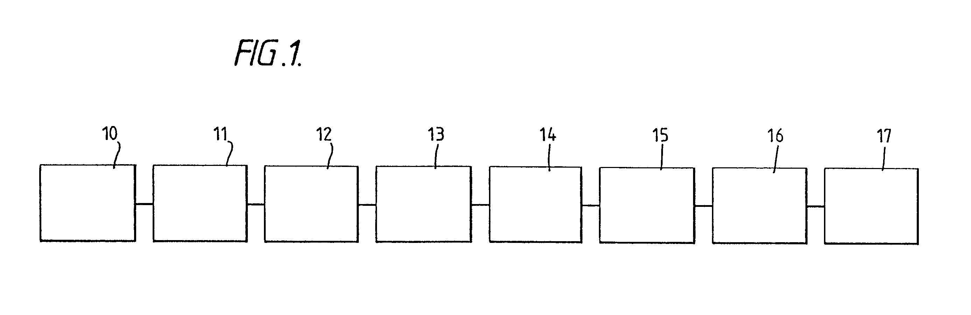

In the drawings Figure 1 is a block diagrammatic illustration of the method and apparatus of forming a plastics coated pipe of the present invention, which comprises passing a flat strip of aluminium approximately 0.2 mm thick guage from a supply roll 10 to a preforming station 11 where the flat strip is formed into a U section strip. From the pre-forming station 11, the U section strip passes to a forming station 12 where it is formed into an overlapping tube which then passes to a welding station 13 and from these to an inner coating station 14. At the welding station the overlapping aluminium tube is welded and immediately after welding an inner coating of plastics material is extruded onto the inner surface of the tube. The partially coated tube then passes to an outer coating station 15 where an outer coating of plastics material is extruded onto the outer surface of the tube. The coated tube is then passed through a cooling station 16 and from there to a take-up station 17 where it is wound onto a take-up roll.

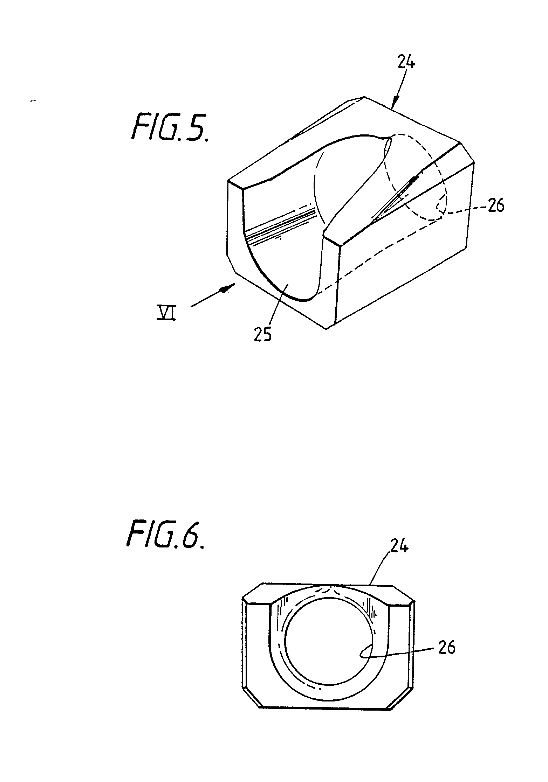

The apparatus of the present invention will now be described in more detail. An aluminium strip 20 is drawn from the supply roll 10 and then passes through a series of forming blocks 21 where it is formed into a U section strip 22. The thickness of the aluminium strip will depend upon the pressures that the finished pipe is designed to withstand but will normally be very thin. The forming process therefore takes place gradually in order to minimise stress and distortion of the metal. The U section strip 22 then passes over one end of a mandrel 23 and into a forming bush 24 which is mounted on the mandrel 23. The forming bush 24 is shown in greater detail in Figure 5. It is formed from a hard polyimide resin and has a funnel shaped tapering channel 25 leading to a generally circular outlet 26. As can be seen from Figure 6 the outlet 26 is asymmetrical so that the aluminium strip is formed into an overlapping pipe as it leaves the bush 24. For reasons which will be apparent, the length of the tapering channel 25 is in the ranges of two to three times the diameter of the outlet 26, but preferably two and one half times the diameter so that the aluminium strip is formed from a U section strip into an overlapping tube 27 over a relatively short distance. The internal diameter of the tube will normally range between 10 mm and 75 mm.

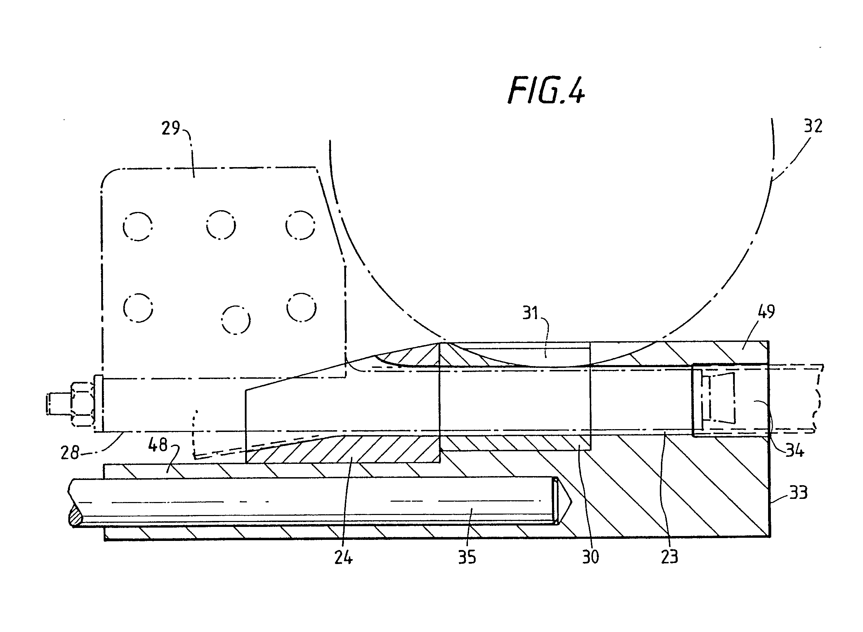

The mandrel 23 is mounted on and projects from an arm 28 which forms part of a manifold 29. As can be seen best from Figure 4, the arm 28 which supports the mandrel 23, extends into the channel 25 of the forming bush 24 and the mandrel 23 then extends through the outlet 26 so that the strip is folded into an overlapping tube 27 around the mandrel 23 as it emerges from the outlet 26 of the forming bush 24.

From the forming bush 24, the overlapping tube 27 passes through a locating sleeve 30, which is made from the same material as the forming bush 24. The locating sleeve 30 has a welding slot 31 on one side and is generally circular so as to hold the form of the overlapping tube 27 as it is welded by an ultrasonic welding wheel 32. The welding wheel 32 is mounted separately from the mandrel 23 and manifold 29 so that it can be brought into position over the locating sleeve 30 and lowered into the welding slot 31 to weld the tube along the overlap. As the welding operation takes place, the mandrel 23 acts as an anvil, the tube 27 being clamped between the wheel 32 and the mandrel during the welding operation. The welding wheel 32 is driven independently, for example by an electric motor (not shown), at a peripheral speed which is matched to the speed at which the overlapping tube 27 passes between the periphery of the wheel 32 and the mandrel 23.

Both the forming bush 24 and the locating sleeve 30 are located within a housing 33 which is carried on the mandrel 23. The housing 33 has a through bore 34 and a plurality of heating elements 35 which maintain the temperature of the housing 33 and thus the temperature around the mandrel 23.

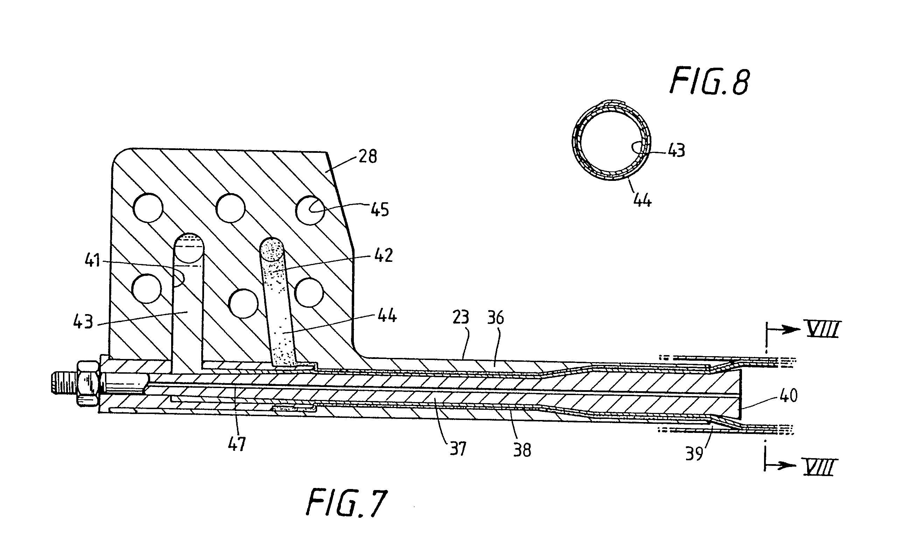

As can be seen best from Figure 7, the mandrel 23 comprises an outer cylindrical wall 36 and a core 37, the gap between the core 37 and the wall 36 defining an annular passageway 38 which terminates in a annular orifice 39 close to the leading end or tip 40 of the mandrel. The annular passageway 38 is connected to and fed by two separate conduits 41 and 42 which communicate through the supporting arm 28 with the manifold 29. Plastics material for coating the inner surface of the welded tube 27 is fed from the manifold 29 to the conduit 41 and plastics adhesive material 44 for bonding the plastics material 43 to the inner surface of the aluminium tube is fed from the mandrel 29 through the conduit 42.

The arm 28 is provided with a plurality of heating elements 45 to maintain the plastics and plastics adhesive material in a hot melt flowable form so that they will flow readily through the conduits 41 and 42 and along the annular passageway 38 in the mandrel 23. The plastics material 43 may conveniently be a polyethylene and the adhesive material 44 for bonding the polyethylene to the inner surface of the aluminium tube may be a grafted polyethylene. However, any suitable plastics and plastics adhesive materials may be used to ensure a good bond onto the inner surface of the aluminium tube.

As the welded tube 27 passes over the annular orifice 39 adjacent the tip 40 of the mandrel, the adhesive material 44 is extruded onto the inner surface of the tube and the plastics material 43 is extruded on top of the adhesive plastics 44. As can be seen from Figure 7, an air line 47 extends through the core 37 of the mandrel and air under pressure is injected into the tube from the end of the mandrel so as to create a permanent pressure within the tube which assists in laying the plastics material onto the inner surface of the tube and serves also, in a manner to be described, to detect any faults which may have occurred in the welding of the aluminium strip.

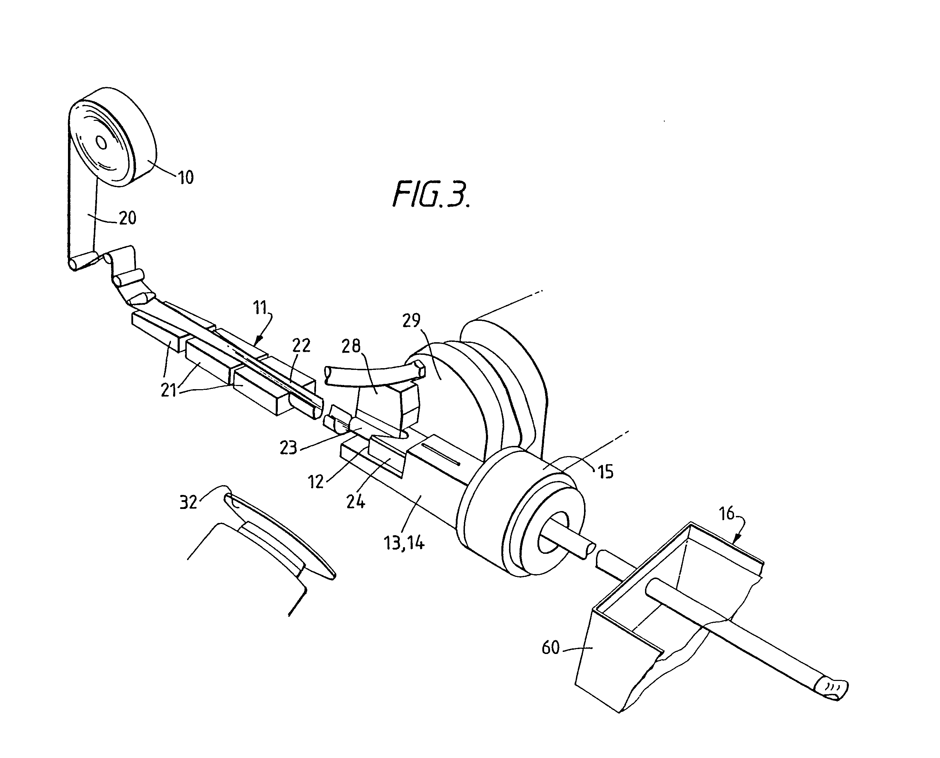

The forming bush 24 and the locating sleeve 30 are carried by the housing 33 which, together with the bush 24 and sleeve 30, is carried on the mandrel 23 so as to float and move with the mandrel. As can be seen best from Figure 3, the housing 33 is L shaped and has a lower portion 48 on which the forming bush is seated and an upper portion 49 formed with the bore 34 into which the mandrel 23 extends.

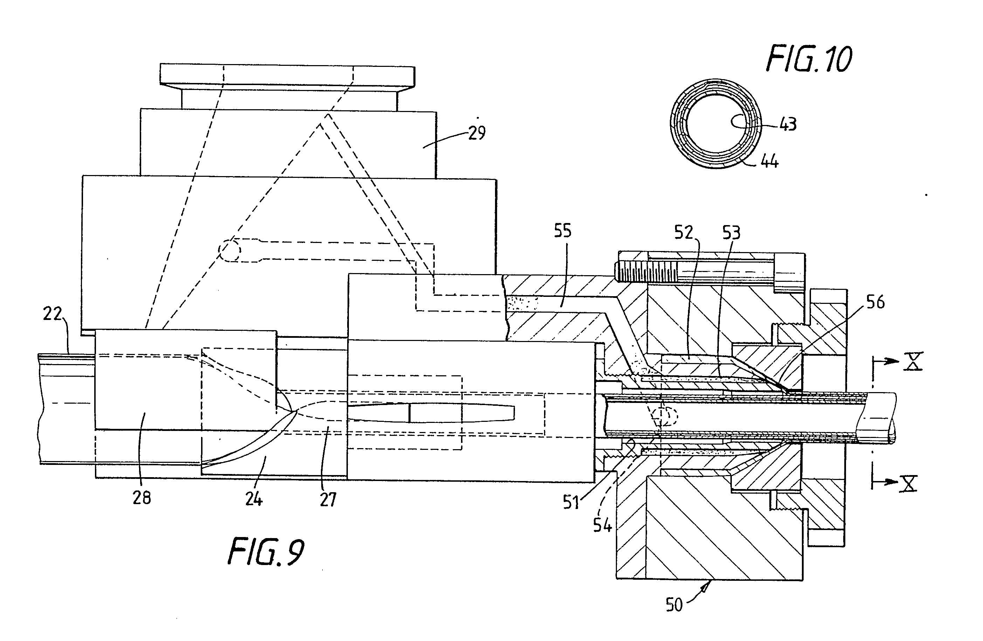

Closely adjacent the end of the housing 33 is a coating bush 50 which is removably attached to the manifold 29 and which is formed with a bore 51 through which the welded tube 27 passes when it emerges from the housing 33. The coating bush 50 is formed with annular passageways 52 and 53 which communicate with conduits 54 and 55, respectively, in the manifold 29. The annular passageways 52 and 53 merge into an annular orifice 56 which opens into the bore 51. A plastics material, such as polyethylene, is fed from the manifold 29 through the passageway 54 and an adhesive material such as a grafted polyethylene is fed from the manifold through the passageway 55. As can be seen from Figure 9, as the annular passageway 53 is positioned radially inwardly of the annular passageway 52, the adhesive material is laid onto the outer surface of the aluminium tube as the tube passes through the bore 51 past the orifice 56 and the plastics material is thus laid on top of the adhesive.

As the tube emerges from the coating bush 50 it has an inner coating of polyethylene bonded to the inner surface of the tube by a grafted polyethylene and a similar outer coating of polyethylene also bonded to the outer surface of the tube by a grafted polyethylene. From the coating bush 50, the coated tube passes through a cooling water bath 60 and from there to a take up roll, which is not shown.

One of the problems which has to be overcome in coating the inner surface of a tube with plastics material is to maintain the temperature of the plastics material so that it will flow readily along the mandrel. Since the mandrel must be of smaller diameter than the internal diameter of the tube, it is not possible to provide heating elements within the mandrel as well as the conduits for the plastics material. We have overcome this problem, firstly by keeping the mandrel relatively short and, secondly, by heating the housing 33 for the forming sleeve 24 and locating sleeve 30 so that the ambient temperature surrounding the mandrel is maintained at a sufficiently high level.

Further, in order to shorten the length of the mandrel, the aluminium strip is transformed from a U section into an overlapping tube ready for welding over a very short distance. The overlapping tube is then welded and the plastics material is extruded onto the inner surface of the tube simultaneously. These objectives are achieved by providing the forming bush with a funnel shaped bore which forms the aluminium strip from a U shape into an asymmetric overlapping tube over a short distance of approximately twice the diameter of the finished tube. The over lapping tube is then welded immediately it is formed and the inner surface coated with plastics material from the mandrel immediately downstream of the welding station.

It has also been found that, by shortening the length of the mandrel to the absolute minimum, movement' of the mandrel at the tip of the mandrel is reduced although not necessarily eliminated. Movement of the tip of the mandrel at the point at which plastics material is extruded onto the inner surface of the tube causes variations in the thickness of the plastics material extruded onto the inner surface of the tube but is has been found that these variations are reduced by mounting the housing 33, the bush 24 and the sleeve 30 on the mandrel so that they float with the mandrel.

The forming bush 24, although formed from a relatively hard material is subject to wear. It can however be relatively easily replaced by removing the coating bush 50 and sliding the housing 33 off the mandrel. The bush 24 and the sleeve 30 can then be replaced.

For a variety of reasons, it can happen that the weld of the overlapping tube is faulty. Imperfections in the welding of the tube can be detected if the end of the tube is initially pinched and sealed as it comes through the apparatus so that it is placed under internal air pressure through the air line 47. Any faults in the tube weld will cause air to escape from the tube as it passes through the cooling bath 60 and the bubbles of air will be readily apparent indicating a fault in the weld. Alternatively, a sensing mechanism may be provided to sense a drop in pressure within the tube at any point downstream of the welding station. As the plastics on the internal and external surfaces of the tube is still relatively soft when the tube enters the cooling bath, the pressure of air within the tube will blow through the soft plastics at any point where there is a fault in the weld. Alternatively, a sensing mechanism may be provided to sense a drop in pressure within the tube at any point downstream of the welding station.

The welding operation is carried out by an ultrasonic welding wheel which extends through the slot 31 in the locating sleeve 30 and presses the overlapping edges of the tube against the mandrel 23 which thus acts as an anvil for the welding wheel during the welding operation. Unlike known types of ultrasonic welding wheel which rely upon the movement past the periphery of the wheel of the material to be welded, that used in the apparatus of the invention is operatively connected to a separate drive means, for example an electric motor, which rotates the welding wheel at a peripheral speed corresponding to the speed of the overlapping edges of the tube over the mandrel.

## Claims

1. Apparatus for forming a plastics coated metal tube comprising means for forming a continuous strip of metal into a U-shape, a forming bush for folding the strip into an overlapping tube, a mandrel extending through the forming bush, a locating sleeve for locating the tube as it passes over the mandrel, welding means for welding the overlapping tube as it passes through the locating sleeve and means for extruding plastics material from the mandrel onto the inner surface of the tube as it passes over the mandrel, characterised in that the welding means comprises an ultrasonic welding wheel and drive means for the welding wheel, the drive means being capable of driving the welding wheel at a peripheral speed identical to the speed at which the overlapping tube is drawn past the wheel.

2. Apparatus according to claim 1, wherein the drive means is an electric motor.

FIG.1.

FIG. 2

EP 0 353 977 A2

FIG.3.

FIG.4

FIG.5.

24

26

VI

25

FIG.6.

24

26

EP 0 353 977 A2

*FIG.8*

*FIG.7*

FIG.10

FIG.9